# FASCICULE DE BREVET EUROPEEN

(11) **EP 0 815 527 B1**
(45) Date de publication et mention de la délivrance du brevet: **03.12.2003**
(21) Numéro de dépôt: 97900227.6
(22) Date de dépôt: 03.01.1997
(51) Int. Cl.: G06K 7/00, G06K 7/06

(54) **COUPLEUR POUR GERER UNE COMMUNICATION ENTRE UN SUPPORT DE DONNEES PORTABLE ET UN DISPOSITIF D'ECHANGE DE DONNEES, ET DISPOSITIF D'ECHANGE DE DONNEES ASSOCIE**
KOPPLER ZUR KOMMUNIKATIONSVERWALTUNG ZWISCHEN EINEM TRAGBAREN TRÄGER UND EINER DATENAUSTAUSCHVORRICHTUNG UND DATENAUSTAUSCHVORRICHTUNG DAFÜR
COUPLER FOR MANAGING COMMUNICATION BETWEEN A PORTABLE DATA MEDIUM AND A DATA EXCHANGE DEVICE, AND DATA EXCHANGE DEVICE THEREFOR

(30) Priorité: 12.01.1996 FR 9600308
(43) Date de publication de la demande: 07.01.1998
(73) Titulaire: CP8 Technologies, 78431 Louveciennes (FR)
(72) Inventeur: LAFON, Jean-Pierre, F-92320 Chatillon (FR); DENIAU, Bernard, F-94600 Choisy-le-Roi (FR)
(74) Mandataire: Corlu, Bernard
(86) Numéro de dépôt international: FR9700010
(87) Numéro de publication internationale: WO97025685

(56) Documents cités:
- EP-A- 0 202 622
- EP-A- 0 670 556
- US-A- 5 149 945
- ELECTRONIQUE RADIO PLANS, vol. 541, Décembre 1992, PARIS, FR, pages 43-47, XP000323501 PATRICK GUEULLE: "LE COUPLEUR DE CARTE A PUCE CCU 910 COREL"
- ELECTRONIQUE RADIO PLANS, vol. 543, Février 1993, PARIS, FR, pages 35-39, XP000332002 PATRICK GUEULLE: "L' INTERFACE DE CARTES A PUCE TDA8000 PHILIPS"

## Description

La présente invention concerne un coupleur pour gérer une communication entre un support de données portable et un dispositif d'échange de données, la communication mettant en oeuvre, du côté du dispositif d'échange de données, au moins un signal de transmission de données et deux signaux de commande délivrés par le dispositif d'échange de données selon l'une de deux première et seconde séquences d'entrée prédéterminées et, du côté du support de données, au moins un signal d'alimentation du support de données, un signal de réinitialisation du support de données, et un signal de transmission de données.

Ce coupleur peut par exemple être utilisé pour limiter l'accès à un réseau d'ordinateurs à des personnes autorisées, détenant à cet effet un support de données portable tel qu'une carte à puce incorporant un microprocesseur ou des circuits logiques microcablés définissant des zones dont l'accès est contrôlé et peuvent donc renfermer des informations secrètes telles que des clés cryptographiques (voir par exemple l'objet portatif décrit dans le brevet américain N° 4.211.919).

Le protocole d'échange avec une carte à puce a été codifié par la norme internationale ISO7816-3 qui définit la séquence de génération des signaux appliqués à la carte à puce, à savoir un signal d'alimentation VCC, un signal d'alimentation des mémoires, VPP, un signal de réinitialisation RST, un signal d'horloge CLK et un signal d'échange de données I/O. La norme définit de façon très précise dans quel ordre doivent apparaître puis disparaître ces signaux.

Un tel coupleur peut comporter de façon connue en soi un microprocesseur qui commande l'interface avec le support de données portable et est commandé par le dispositif d'échange de données qui constitue le processeur central. Ce microprocesseur ralentit la procédure d'échange entre le dispositif d'échange de données asynchrone et le support de données portable.

Pour éviter l'usage d'un microprocesseur dans le coupleur, il a été proposé d'utiliser certains des signaux fournis par un port série du dispositif d'échange de données, typiquement un port selon la norme RS 232, à savoir un signal "prêt à émettre", CTS (Clear to send), un signal de demande pour émettre, RTS (Request to send), un signal de "détection de support de données", DCD (Data carrier detect), un signal "terminal de données prêt", DTR (Data terminal ready), un signal de transmission de données, TX et un signal de réception de données, RX, pour générer les signaux appliqués au support de données portable .

Un tel coupleur est décrit dans le brevet américain 5 149 945. Le séquencement des signaux fournis à la carte à puce est défini exclusivement par le dispositif d'échange de données, sans que le coupleur puisse intervenir sur ce séquencement pour tenir compte de situations de fonctionnement particulières côté carte à puce.

Une conséquence est que la norme précitée n'est pas toujours respectée, notamment lors d'une ré-insertion de la carte à puce, après un arrachement en cours de communication avec le dispositif d'échange de données, car la carte à puce est immédiatement remise sous tension, sans que le dispositif d'échange de données n'ait le temps matériel de réagir pour imposer une remise sous tension selon le séquencement normalisé.

Par ailleurs, il paraît souhaitable que le coupleur puisse intervenir sur le séquencement des signaux délivrés par le dispositif d'échange de données pour fournir un éventail plus large de modes de commande ou de test de la carte à puce.

L'invention vise à résoudre les inconvénients précités et concerne à cet effet un coupleur tel que décrit au début de l'exposé, caractérisé en ce que :
- le coupleur comprend des moyens de commande bistables activés en entrée par au moins lesdits deux signaux de commande délivrés par le dispositif d'échange de données, et les moyens de commande bistables étant agencés pour délivrer en sortie au moins ledit signal d'alimentation et ledit signal de réinitialisation du support de données selon une première séquence de sortie prédéterminée, qui est fonction de ladite première séquence d'entrée ;
- ladite première séquence d'entrée est seule apte à générer la première séquence de sortie comprenant successivement ledit signal d'alimentation et ledit signal de réinitialisation du support de données qui permettent au dispositif d'échange de données d'entrer en communication avec le support de données portable.

Ainsi, les moyens de commande bistables permettent d'intervenir sur le séquencement des signaux délivrés par le dispositif d'échange de données pour produire ou non, à partir de ces signaux et en fonction de ceux-ci, les signaux destinés à la carte à puce, comme celà apparaîtra mieux au cours de la description des figures jointes. Les moyens de commande bistables permettent de commander la carte à puce, à la fois en fonction du comportement instantané du dispositif d'échange de données et en fonction de celui de la carte à puce.

L'invention concerne aussi un dispositif d'échange de données agencé pour gérer une communication avec un support de données portable, le dispositif comprenant à cet effet des moyens d'échange de données , et des moyens de couplage tels que le coupleur défini ci-dessus, ces moyens de couplage comprenant en outre des moyens de détection de présence du support de données portable, agencés pour délivrer aux moyens d'échange de données un signal de présence du support lorsque le support de données portable coopère avec les moyens de couplage , à réception d'un premier desdits signaux de commande, l'envoi de ladite seconde séquence d'entrée par les moyens d'échange de données lui permettant de détecter la présence du support de données portable sans que celui-ci ne soit alimenté, et les moyens d'échange de données étant agencés pour envoyer cycliquement aux moyens de couplage , avant une communication avec le support de données portable, ladite seconde séquence d'entrée jusqu'à ce qu'ils reçoivent ledit signal de présence du support de données portable.

D'autres caractéristiques et avantages de l'invention ressortiront de la description qui suit, faite à titre illustratif et nullement limitatif, en se référant aux dessins ci-annexés, sur lesquels:
la figure 1 représente une configuration comportant un coupleur selon l'invention,
la figure 2 est un schéma synoptique du coupleur,
la figure 3 illustre le protocole d'échange avec une carte à puce selon la norme ISO 7816-3,
la figure 4 représente le séquencement des signaux fournis par le dispositif d'échange de données ,
la figure 5 est un schéma partiel du coupleur concernant l'alimentation interne,
la figure 6 est un schéma partiel du coupleur concernant la génération des signaux de commande appliqués au support de données portable, et
la figure 7 est un schéma partiel du coupleur concernant le transfert des signaux de données

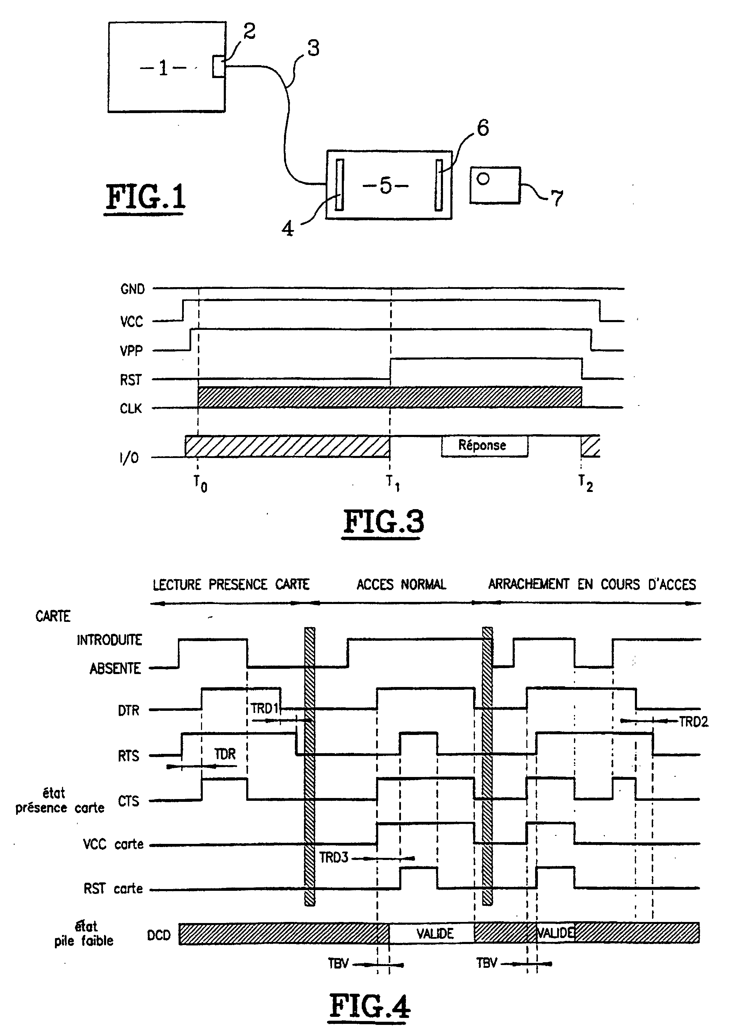

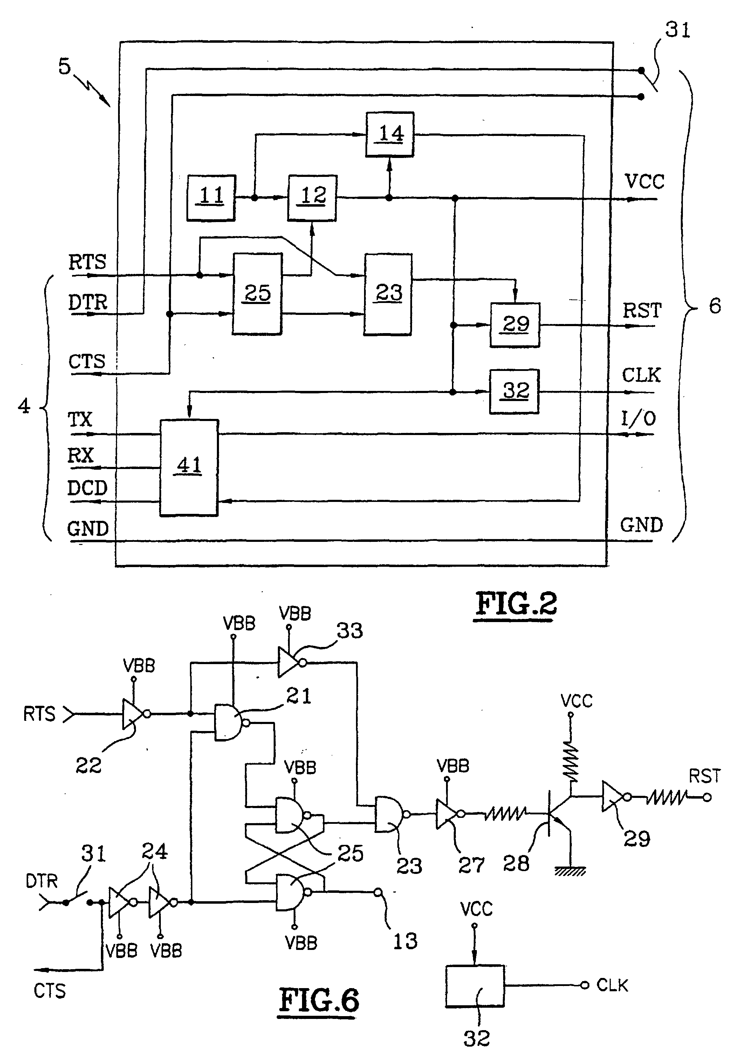

La figure 1 représente une configuration typique d'un ordinateur individuel 1 dont un connecteur de port 2, par exemple d'un port série du type RS 232, est relié par un câble 3 à un connecteur de port série 4 d'un coupleur 5. Le coupleur 5 comporte également un connecteur de carte à puce 6 qui peut recevoir une carte à puce 7. Le dispositif d'interface 5 sert à gérer les échanges de données entre la carte à puce 7 et l'ordinateur individuel 1 ; ce coupleur 5 peut en particulier être utilisé pour des fonctions de sécurité, par exemple pour contrôler les accès à des ordinateurs ou à des réseaux informatiques, les personnes autorisées étant munies d'une carte d'identification à puce.

La figure 2 est le schéma synoptique du coupleur 5 qui reçoit les signaux RTS, DTR, CTS, TX, RX et DCD de la liaison série de l'ordinateur 1 par l'intermédiaire du connecteur de port série 4; son connecteur de carte à puce 6 comporte des fiches reliées aux signaux VCC, RST, CLK et I/O de la carte à puce ainsi qu'à un interrupteur de présence carte 31 fermé par la carte à puce lorsque celle-ci est introduite dans le connecteur 6.

Le signal DTR, via un interrupteur de présence carte à puce 31, et le signal RTS sont envoyés sur un circuit bistable 25 qui commande un circuit d'alimentation 12 et un circuit de blocage 23. Le rôle du circuit bistable 25 est d'autoriser d'une part la fourniture d'une tension d'alimentation VCC destinée à des circuits du coupleur, en particulier à des circuits 29, 32, 41, et à la carte à puce 7, et d'autre part la transmission du signal RST à travers le circuit de blocage 23. Cette autorisation est délivrée uniquement si les signaux DTR, RTS sont activés dans l'ordre DTR, RTS.

L'interrupteur de présence carte 31 est relié au signal CTS pour remonter au connecteur de port série 4 l'information de présence de la carte à puce.

Le signal VCC est envoyé à un circuit d'interface 29 générant le signal RST, à un générateur d'horloge 32 générant le signal CLK et à un circuit d'interface 41 générant le signal I/O , ce qui garantit que les signaux RST, CLK et I/O ont une tension inférieure à celle du signal VCC puisque dérivée de celle-ci, conformément aux exigences de la norme ISO7816-3.

Le coupleur 5 comprend encore une source d'énergie 11 qui attaque d'une part le circuit d'alimentation 12 fournissant le signal VCC-régulé, et d'autre part un circuit de comparaison 14 qui compare un niveau de la source d'énergie 11 avec une référence constituée en l'occurence par le signal VCC régulé.

Le circuit de comparaison 14 délivre en sortie un niveau de la source d'énergie dit "faible" et le transmet à travers le circuit d'interface 41 au signal DCD.

Le signal de référence de potentiel GND est transmis directement de l'ordinateur à la carte à puce, à travers le coupleur 5.

D'une façon générale, les échanges de données avec une carte à puce sont codifiés par la norme ISO 7816 dont la partie 7816-3 concerne le séquencement des différents signaux appliqués à la carte à puce, à savoir le signal de référence de potentiel GND, le signal d'alimentation VCC, le signal d'alimentation des mémoires VPP, le signal d'horloge CLK, le signal de réinitialisation RST et le signal d'échange de données I/O, comme cela est représenté sur le chronogramme de la figure 3.

On voit que, lors de l'établissement de l'échange, les signaux VCC, VPP, CLK et RST doivent être fournis dans cet ordre ; le signal VPP n'étant généralement pas utilisé est alors court-circuité par raccordement avec le signal VCC. A la fin de l'échange, les signaux précités doivent disparaître dans l'ordre inverse.

La figure 4 est un chronogramme des signaux de la liaison série de l'ordinateur qui sont envoyés au coupleur 5 ; on distingue trois types de fonctionnement différents correspondant aux trois situations suivantes :
- lecture (c'est-à-dire test) de la présence de la carte à puce par l'ordinateur sans alimenter la carte à puce, donc sans consommer sur la source de tension 11 ;
- accès normal à la carte à puce en alimentant celle-ci, en vue d'un dialogue ordinateur-carte à puce ;
- arrachement de la carte à puce alors qu'on se trouve en cours d'accès normal.

Une première ligne de la figure 4 définit la position de la carte à puce par rapport au coupleur et comporte un état haut correspondant au cas où la carte à puce est introduite dans le coupleur de façon à être non seulement en contact électrique avec lui mais aussi de façon à fermer l'interrupteur de présence carte 31 , et un état bas correspondant au cas où la carte à puce est absente. Les lignes suivantes DTR et RST (commande du circuit bistable 25), CTS (état de présence carte à puce ), VCC ( alimentation carte) et RST (réinitialisation carte) présentent elles aussi deux états haut et bas, le premier correspondant au signal actif. Enfin, une dernière ligne DCD (état de pile faible) présente alternativement des zones ombrées et claires, ces dernières portant la mention "valide" indiquant que le test de l'état de la pile est possible.

Dans le premier type de fonctionnement, on voit en particulier que l'ordinateur émet le signal RTS avant le signal DTR, cette séquence étant produite cycliquement jusqu'à ce que la carte soit détectée, cette détection entraînant le report du signal DTR sur le signal CTS qui donne l'état de présence de la carte, mais pas l'activation du signal VCC car le séquencement DTR puis RTS n'est ici, par hypothèse, pas respecté ; en conséquence, ni le signal RST, ni le signal DCD ne sont activés. Lors d'un retrait partiel de la carte à puce , les trois signaux RTS, DTR et CTS étant activés, seul le dernier CTS est alors désactivé. En vue de produire un nouveau séquencement DTR, RTS, l'ordinateur ramène d'abord ces deux signaux à l'état bas dans l'ordre inverse.

Afin de respecter des temps de fonctionnement intrinsèque du circuit bistable 25, l'intervalle de temps TDR séparant les deux signaux RTS et DTR (établissement du signal RTS avant que le signal DTR ne soit actif) est au moins égal à un retard de porte logique, c'est-à-dire de l'ordre de quelques microsecondes. L'intervalle de temps TRD1 qui sépare la désactivation du signal RTS de celle de DTR est également du même ordre de grandeur.

De préférence, le premier type de fonctionnement sera déclenché cycliquement pour détecter l'insertion de la carte à puce dans le coupleur, avant d'avoir mis la carte à puce sous tension. En outre, dans les cas où l'on souhaite vérifier, à intervalles réguliers au cours d'une communication déjà établie, la présence de la carte à puce (notamment pour s'assurer que l'usager du coupleur est bien habilité et que la carte à puce n'a pas été frauduleusement remplacée par une carte à puce non réglementaire), ce premier type de fonctionnement sera re-déclenché autant de fois que désiré.

Dans le second type de fonctionnement, l'ordinateur émet le signal DTR avant RTS de façon à respecter les exigences de la norme ISO7816-3. A la différence du type précédent, l'activation du signal DTR, la carte à puce étant totalement insérée, entraîne non seulement celle du signal CTS par lequel la carte à puce répond à l'ordinateur, mais aussi celle du signal VCC, et l'activation du signal RTS entraîne celle du signal RST de réinitialisation de la carte à puce qui déclenche le fonctionnement effectif de la carte à puce. Il faut noter par ailleurs que l'activation du signal VCC entraîne celle du signal CLK non visible sur la figure 4, avant celle du signal RST.

En fin de communication entre l'ordinateur et la carte à puce, l'ordinateur ramène tout d'abord le signal RTS à l'état bas, ce qui entraîne la désactivation du signal RST, puis l'ordinateur ramène le signal DTR à l'état bas, ce qui entraîne la désactivation du signal CLK non visible sur la figure 4,puis la chute de tension du signal VCC. Comme déjà expliqué précédemment à propos de la figure 2, c'est le fait que les tensions des signaux RST et CLK sont dérivées de la tension du signal VCC, qui garantit ce séquencement.

On constate donc que le séquencement des signaux DTR, RTS défini par l'ordinateur, en association avec celui défini par le coupleur, permet bien de respecter les exigences de la norme ISO7816-3 rappelées à la figure 3, tant à la mise sous tension de la carte à puce qu'à la mise hors tension de celle-ci. Egalement en vue de respecter cette norme, la durée TRD3 correspond au temps minimum d'activation de RST par RTS après mise sous tension par DTR et la durée TBV correspond au temps d'attente après la mise sous tension du coupleur, avant une lecture de l'état de la pile.

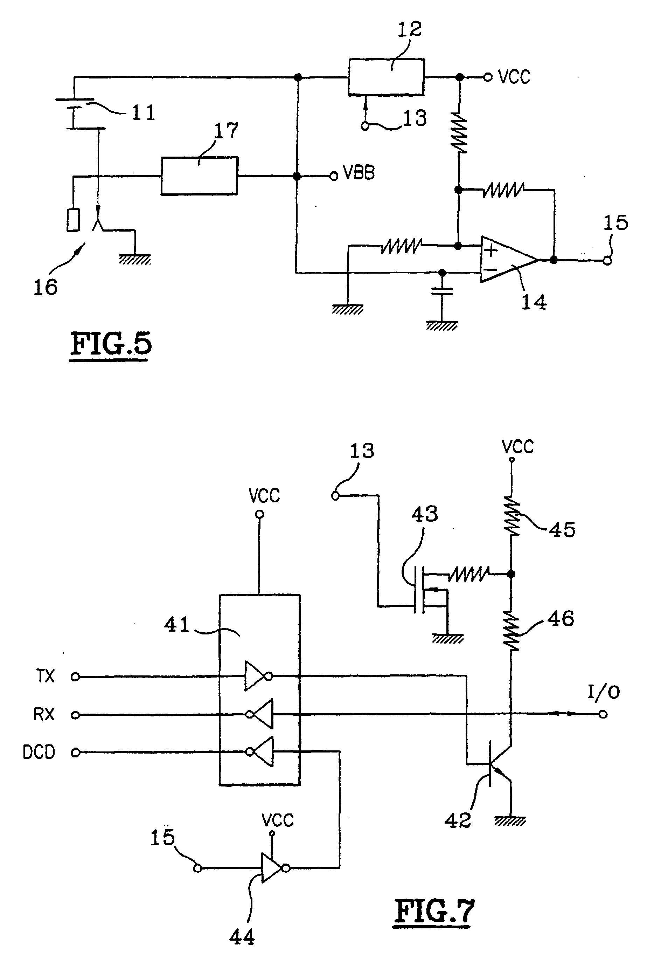

L'état de "pile faible" est reporté sur le signal DCD si une tension d'alimentation VBB, définie plus loin à la figure 5, tombe en dessous de la tension de référence. Vu de l'ordinateur , on a le comportement suivant:
si la mise sous tension de la carte à puce est réalisée (DTR actif) et que la pile est bonne, le signal DCD est au niveau haut (- 12 V sur la ligne)
si le signal "pile faible" apparaît, DTR étant actif, le signal DCD prend la valeur basse (+ 12 V sur la ligne) avec la temporisation TBV par rapport au signal VCC.

Le test de pile faible peut être réalisé jusqu'à la fin de la communication.

On notera que le second type de fonctionnement décrit ci-dessus peut, soit faire suite au premier type de fonctionnement après une détection effective de la présence de la carte à puce, soit être déclenché directement.

Dans le troisième type de fonctionnement, alors que l'on a initié un dialogue ordinateur-carte à puce selon le second type décrit ci-dessus, un arrachement de la carte à puce se produit, ce qui entraîne la désactivation du signal RST, du signal CLK non visible sur la figure 4, puis la chute de tension du signal VCC, même si, par rapport au second type de fonctionnement, cette désactivation s'effectue sur une période de temps plus brève. Quant au signal d'état de pile faible DCD, il est également désactivé lors de l'arrachement de la carte à puce.

Avantageusement, une ré-introduction de la carte à puce a pour seul effet de ré-activer le signal CTS, sans permettre une ré-activation des signaux VCC, CLK et RST. Ceci permet aussi de s'affranchir des inconvénients provoqués par un effet de rebond, connu en soi, de l'interrupteur de présence carte 31 et susceptible de ré-activer aléatoirement le signal d'alimentation VCC, et par conséquent les signaux CLK et RST.

Dans cette situation, l'ordinateur provoque la désactivation des signaux DTR puis RTS comme selon le premier type de fonctionnement avec un décalage temporel TRD2 identique à TRD1. La désactivation du signal DTR provoque celle du signal CTS qui était encore à l'état haut.

La figure 5 est un premier schéma partiel du coupleur selon l'invention et concerne l'alimentation du coupleur. Ce dernier comporte, en référence à la figure 2, la source d'énergie électrique 11 qui est intégrée et constituée, en l'espèce, par une source de tension comprenant par exemple un générateur électrique, tel qu'un ensemble de deux piles, une cellule photovoltaïque ou un condensateur de capacité très élevée. La tension de cette source de tension 11, VBB, disponible sur une borne positive de celle-ci, est envoyée sur le circuit d'alimentation 12 qui est de type connu et fournit une tension VCC de 5 V normalisée, laquelle est utilisée dans le coupleur 5 et appliquée aussi à la carte à puce 7. Le circuit d'alimentation 12 est commandé par un signal appliqué en 13,

La tension VBB est également envoyée sur un circuit de détection de "pile faible" qui comporte essentiellement le circuit de comparaison 14 de la figure 2, qui compare la tension VBB à une valeur de seuil obtenue à partir de la tension VCC et fournit un signal d'alarme "pile faible" sur une sortie 15.

On peut également prévoir une alimentation extérieure qui est envoyée sur une prise de jack 16 et est régulée par un circuit de régulation 17 dont la sortie est reliée à la borne positive de la source de tension 11 et, par suite, au circuit de régulation 12.

Cette alimentation extérieure peut également être utilisée pour recharger la source de tension 11 lorsque celle-ci est rechargeable (batterie ou condensateur à capacité très élevée).

La figure 6 est un autre schéma partiel du coupleur selon l'invention concernant la génération des signaux appliqués à la carte à puce 7 et la détection de la présence de cette dernière.

Le signal RTS attaque une première entrée d'une porte NON-ET 21 par l'intermédiaire d'un inverseur 22 ; cette première entrée est reliée à une première entrée d'une autre porte NON-ET 23, constituant le circuit de blocage de la figure 2, par l'intermédiaire d'un autre inverseur 33. Le signal DTR attaque, par l'intermédiaire de deux inverseurs en série 24, une deuxième entrée de la porte 21 et une première entrée d'une bascule bistable 25 de type RS correspondant au circuit bistable de la figure 2 et constituée de deux portes NON-ET et dont une deuxième entrée reçoit le signal de sortie de la porte 21. Une première sortie de la bascule 25 fournit en 13 un signal de commande de l'alimentation qui correspond à la borne 13 du circuit d'alimentation 12.

La deuxième sortie de la bascule 25 est envoyée sur une deuxième entrée de la porte 23 dont la sortie commande, par l'intermédiaire d'un inverseur 27, un transistor NPN 28 branché entre la tension d'alimentation VCC et la masse, et dont le collecteur fournit, par l'intermédiaire d'un inverseur 29 constituant le circuit d'interface de la figure 2, le signal RST. Toutes les portes du circuit de cette figure situées en amont du transistor 28 sont alimentées par la tension VBB de la source de tension 11 de telle sorte que ce circuit est toujours en état de veille et peut générer des signaux en l'absence du signal d'alimentation VCC.

Une fiche d'entrée du connecteur de port 2 délivrant le signal DTR est reliée à une autre fiche de ce même connecteur recevant le signal CTS par l'intermédiaire de l'interrupteur de présence carte 31 associé au connecteur de carte à puce 6 et fermé lorsque la carte à puce 7 est en place dans le connecteur 6.

Par ailleurs, un oscillateur à quartz 32, constituant le générateur d'horloge de la figure 2 et activé par le signal d'alimentation VCC, fournit le signal d'horloge CLK avec un retard correspondant à un retard de porte logique.

On voit que le circuit logique de la figure 6 permet de respecter le séquencement des signaux VCC, CLK et RST. En effet, du fait que, lors d'un accès normal, le signal DTR est appliqué en premier , ce qui est géré par un logiciel logé dans l'ordinateur individuel, la bascule 25 fournit tout d'abord le signal de commande d'alimentation 13 qui active le circuit de régulation 12. Le circuit de régulation 12 fournit alors le signal VCC. Ensuite, lorsque le signal RTS apparaît, la bascule 25 change d'état et commande la génération du signal RST qui ne peut lui-même apparaître que lorsque le signal VCC est établi.

Le signal d'horloge, CLK, ne peut être produit qu'après l'établissement du signal d'alimentation VCC puisque l'oscillateur à quartz 32 est commandé par le signal d'alimentation VCC.

Lors d'un cycle de lecture de la présence de la carte (voir figure 4), les signaux DTR et RTS sont appliqués selon la séquence inverse et la bascule ne commande pas la génération des signaux VCC, CLK et RST; en particulier, la source de tension 11 reste à l'état de veille. La présence de la carte à puce ferme l'interrupteur de présence carte 31, ce qui renvoie l'information de présence carte vers l'ordinateur par le signal CTS ; cette opération de détection de présence carte se fait sans consommation sur la source de tension, le circuit d'alimentation 12 n'étant pas activé.

L'information de présence de carte à puce fournie par le signal CTS permet de gérer la présence de la carte à puce par l'ordinateur individuel en temps réel ; cela permet en particulier de détecter l'arrachement de la carte à puce pendant l'échange de données pour réaliser une fermeture de session (fin de tâche).

La figure 7 est un autre un schéma partiel du coupleur ayant pour fonction principale d'assurer le transfert des signaux de données entre l'ordinateur et la carte à puce. Le circuit d'interface 41 de la figure 2 effectue une conversion des signaux TX, RX, et DCD qu'il reçoit ou produit. Un transistor NPN 42 est prévu, dont le collecteur est relié, par l'intermédiaire de deux résistances en série 45, 46, à la tension VCC, et dont l'émetteur est à la masse. La base du transistor 42 est attaquée par le signal TX ressortant du circuit d'interface 41, tandis que son collecteur est reliée à la borne I/O du connecteur de la carte à puce. Ce collecteur est relié à un inverseur du circuit d'interface 41 délivrant en sortie le signal RX.

La sortie 15 du circuit de comparaison 14 de la figure 5 attaque un inverseur 44 relié en sortie à un inverseur du circuit d'interface 41 délivrant en sortie le signal d'alarme DCD "pile faible".

Le circuit d'interface 41 et l'inverseur 44 sont alimentés par la tension VCC.

Le signal de commande 13 du circuit d'alimentation 12 de la figure 5 commande un transistor 43 à effet de champ MOSFET polarisé directement avec une tension positive, qui permet d'accélérer la chute du signal d'alimentation VCC et par conséquent des signaux CLK; RST et I/O lors de la mise hors tension, de manière à obtenir un temps de descente de 5 V à 0,4 V inférieur au temps de glissement des contacts de la carte, de façon à respecter la norme ISO 7816-3 qui précise la nécessité d'avoir une tension inférieure à 0,4 V au moment de la déconnexion des contacts.

En fonctionnement, le circuit d'interface 41 assure un multiplexage/démultiplexage entre les signaux TX, RX d'une part et I/O d'autre part. On notera que le signal DCD "pile faible" constitue plus généralement un signal d'alarme susceptible de détecter d'autres anomalies telles qu'une carte à puce défectueuse produisant un court-circuit des contacts.

L'utilisation d'une source de tension intégrée permet d'obtenir les signaux à appliquer à la carte à puce en toute sécurité, sans faire appel à une alimentation de l'ordinateur individuel, ce qui est important dans le cas d'ordinateurs portables.

Par ailleurs, le coupleur selon l'invention est de conception simple, ce qui permet d'obtenir un faible prix de revient et un encombrement réduit : ainsi, on peut réaliser un dispositif d'interface dont les dimensions sont de l'ordre de celles d'une carte à puce.

Dans l'exemple décrit ci-dessus, on a sélectionné certains signaux de commande particuliers RTS, DTR, CTS, et DCD de la liaison série du dispositif d'échange de données pour coopérer avec le coupleur, et on a attribué à chacun d'eux une fonction particulière, spécifique du fonctionnement d'un support de données portable. Il est clair que l'invention ne se limite pas à cette sélection particulière. De façon plus générale, tout signal de la liaison série qui, selon le protocole de communication de cette liaison, sort du dispositif d'échange de données, pourra jouer le rôle de l'un quelconque des signaux RTS, DTR ou DCD ; de même, tout signal de la liaison série qui, selon le protocole de communication de cette liaison, rentre dans le dispositif d'échange de données, pourra jouer le rôle du signal CTS (par exemple, pour une liaison RS232, le signal DSR Data-Set-Ready).

Par ailleurs, si le coupleur décrit ci-dessus est agencé pour effectuer une transmission de signaux de données série, il est clair que l'invention s'applique tout autant à une transmission de signaux de données parallèle, le dispositif d'échange de données et le support de données portable comportant alors des moyens d'interface de données appropriés.

D'autre part, si le coupleur décrit ci-dessus a été décrit comme un dispositif physiquement distinct du dispositif d'échange de données et du support de données portable, il pourrait naturellement être intégré à l'un ou l'autre de ces deux appareils. Dans un tel cas, les moyens de connexion entre l'appareil concerné et le coupleur tels qu'un connecteur ou un câble, décrits en relation avec la figure 1, pourraient éventuellement être supprimés.

Par ailleurs, dans les second et troisième types de fonctionnement de la figure 4, et selon une forme de réalisation moins préférée, on n'utilise pas de signal CTS. En effet, la mise sous tension de la carte à puce dans le second type de fonctionnement, et la mise hors tension de la carte à puce dans le troisième type de fonctionnement ne requièrent pas la gestion de ce signal pour respecter la norme ISO7816-3.

## Revendications

1. Coupleur (5) pour gérer une communication entre un support de données portable (7) et un dispositif d'échange de données (1), la communication mettant en oeuvre, du côté du dispositif d'échange de données (1), au moins un signal de transmission de données et deux signaux de commande délivrés par le dispositif d'échange de données (1) selon l'une de deux première et seconde séquences d'entrée prédéterminées et, du côté du support de données (7), au moins un signal d'alimentation du support de données, un signal de réinitialisation du support de données, et un signal de transmission de données, **caractérisé en ce que** :
- le coupleur comprend des moyens de commande bistables (25) activés en entrée par au moins lesdits deux signaux de commande délivrés par le dispositif d'échange de données (1), les moyens de commande bistables (25) étant agencés pour délivrer en sortie au moins ledit signal d'alimentation et ledit signal de réinitialisation du support de données selon une première séquence de sortie prédéterminée, qui est fonction de ladite première séquence d'entrée ;
- ladite première séquence d'entrée est seule apte à générer la première séquence de sortie comprenant successivement ledit signal d'alimentation et ledit signal de réinitialisation du support de données qui permettent au dispositif d'échange de données d'entrer en communication avec le support de données portable (7).

2. Coupleur selon la revendication 1, **caractérisé en ce qu'**il comprend des moyens (31) de détection de présence du support de données portable (7), agencés pour délivrer au dispositif d'échange de données (1) un signal de présence du support lorsque le support de données portable coopère avec le coupleur, à réception d'un premier desdits signaux de commande, l'envoi de ladite seconde séquence d'entrée par le dispositif d'échange de données (1) lui permettant de détecter la présence du support de données portable (7) sans que celui-ci ne soit alimenté.

3. Coupleur selon la revendication 1, qui comprend des moyens de génération de signaux (29,32) agencés pour :
- recevoir ledit signal d'alimentation présentant un niveau électrique déterminé ; et
- délivrer au support de données portable (7) ledit signal de réinitialisation et un signal d'horloge à partir dudit signal d'alimentation, de façon qu'ils présentent un niveau électrique inférieur audit niveau électrique déterminé du signal d'alimentation.

4. Coupleur selon la revendication 3, dans lequel lesdits moyens de génération de signaux (29,32,41) sont agencés pour recevoir ledit signal de transmission de données délivré par le dispositif d'échange de données (1) et délivrer au support de données portable (7) ledit signal de transmission de données à partir dudit signal d'alimentation, de façon qu'il présente un niveau électrique inférieur audit niveau électrique déterminé du signal d'alimentation.

5. Coupleur selon la revendication 1, **caractérisé en ce que**
- le support de données portable (7) coopère avec le coupleur par des moyens de contact glissants respectifs (6); et
- lesdits moyens de commande bistables (25) comprennent des moyens d'affaiblissement (43) du signal d'alimentation agencés pour affaiblir un niveau électrique du signal d'alimentation en cours de communication jusqu'à un niveau de seuil déterminé, avant que lesdits moyens de contact glissants respectifs cessent de coopérer mutuellement.

6. Coupleur selon la revendication 1, dans lequel :
- une source d'énergie (11,12,23,29) est prévue et agencée pour délivrer, à réception d'un signal d'activation reçu des moyens de commande bistables (25), ledit signal d'alimentation et ledit signal de réinitialisation du support de données ; et
- les moyens de commande bistables sont agencés pour délivrer à la source d'énergie ledit signal d'activation, à réception de ladite première séquence d'entrée.

7. Dispositif d'échange de données (1,5) agencé pour gérer une communication avec un support de données portable (7) le dispositif comprenant à cet effet des moyens d'échange de données (1) et des moyens de couplage (5) , la communication mettant en oeuvre, du côté des moyens d'échange de données (1), au moins un signal de transmission de données et deux signaux de commande délivrés par les moyens d'échange de données (1) selon l'une de deux première et seconde séquences d'entrée prédéterminées et, du côté du support de données (7), au moins un signal d'alimentation du support de données, un signal de réinitialisation du support de données, et un signal de transmission de données, **caractérisé en ce que** les moyens de couplage (5) :
- comprennent des moyens de commande bistables (25) activés en entrée par au moins lesdits deux signaux de commande délivrés par les moyens d'échange de données (1) , les moyens de commande bistables (25) étant agencés pour délivrer en sortie au moins ledit signal d'alimentation et ledit signal de réinitialisation du support de données selon une première séquence de sortie prédéterminée, qui est fonction de ladite première séquence d'entrée ;
- sont agencés de façon que ladite première séquence d'entrée est seule apte à générer la première séquence de sortie comprenant successivement ledit signal d'alimentation et ledit signal de réinitialisation du support de données qui permettent aux moyens d'échange de données (1) d'entrer en communication avec le support de données portable (7) ;
- comprennent des moyens (31) de détection de présence du support de données portable (7), agencés pour délivrer aux moyens d'échange de données (1) un signal de présence du support lorsque le support de données portable coopère avec les moyens de couplage (5) , à réception d'un premier desdits signaux de commande, l'envoi de ladite seconde séquence d'entrée par les moyens d'échange de données (1) lui permettant de détecter la présence du support de données portable (7) sans que celui-ci ne soit alimenté ; et
les moyens d'échange de données (1) sont agencés pour envoyer cycliquement aux moyens de couplage (5), avant une communication avec le support de données portable, ladite seconde séquence d'entrée jusqu'à ce qu'ils reçoivent ledit signal de présence du support de données portable.

8. Dispositif d'échange de données selon la revendication 7, dans lequel les moyens d'échange de données (1) sont agencés pour envoyer, une fois qu'ils ont détecté la présence du support de données portable, ladite première séquence d'entrée.

## Claims

1. Coupler (5) designed to manage a communication between a portable data medium (7) and a data exchange device (1), said communication involving, at the data exchange device (1) end, at least a data transmission signal and two command signals, delivered by the data exchange device (1) in accordance with one of two predetermined first and second sequences, and at the data medium (7) end, at least a data medium power supply signal, a data medium reset signal and a data transmission signal, **characterised in that**:
- the coupler comprises bistable circuit control means (25), activated at input by at least said two command signals delivered by the data exchange device (1), and bistable circuit control means (25) designed to deliver at output at least said data medium power supply signal and reset signal, in accordance with a first predetermined output sequence dependent on said first input sequence;
- only said first input sequence is capable of generating the first output sequence, comprising, in succession, said data medium power supply signal and said reset signal, enabling the data exchange device to establish a communication with the portable data medium (7).

2. Coupler according to claim 1, **characterised in that** it incorporates means (31) for detecting the presence of the portable data medium (7), designed to deliver to the data exchange device (1) a data medium presence detection signal when the portable data medium cooperates with the coupler, on reception of a first of said command signals, the transmission of said second input sequence by the data exchange device (1) enabling it to detect the presence of the portable data medium (7) without the latter being powered.

3. Coupler according to claim 1, incorporating signal generation means (29, 32), designed to:
- receive said power supply signal at a given electric level; and
- deliver to the portable data medium (7) said reset signal and a clock signal from said power supply signal, so that they have an electric level below that of said given electric level of the power supply signal.

4. Coupler according to claim 3, in which said signal generation means (29, 32, 41) are designed to receive said data transmission signal delivered by the data exchange device (1), and deliver to the portable data medium (7) said data transmission signal from said power supply signal, in such a way that it has an electric level below that of said given electric level of the power supply signal.

5. Coupler according to claim 1, **characterised in that**:
- the portable data medium (7) cooperates with the coupler via respective sliding contact means (6); and
- said bistable circuit control means (25) comprise power supply signal attenuation means (43), designed to reduce an electric level of the power supply signal during communication, to a given threshold level before said respective sliding contact means cease to cooperate with each other.

6. Coupler according to claim 1, where:
- an energy source (11, 12, 23, 29) is included and designed to deliver, on receipt of an activation signal received from the bistable circuit control means (25), said data medium power supply signal and said reset signal ; and
- the bistable circuit control means are designed to deliver said activation signal to the power source, on receipt of said first input sequence.

7. Data exchange device (1, 5), designed to manage a communication with a portable data medium (7), said device comprising for this purpose data exchange means (1) and coupling means (5), the communication involving, at the data exchange means (1) end at least a data transmission signal and two command signals, delivered by the data exchange means (1) according to one of two first and second predetermined input sequences, and at the data medium (7) end, at least a data medium power supply signal, a data medium reset signal and a data transmission signal, **characterised in that** said coupling means (5):
- incorporate bistable circuit control means (25), activated at input by at least said two command signals delivered by the data exchange means (1), and bistable circuit control means (25) designed to deliver at output at least said data medium power supply signal and said reset signal, according to a first given output sequence depending on said first input sequence;
- are designed in such a way that only said first input sequence is capable of generating the first output sequence comprising, in succession, said data medium power supply signal and said reset signal, enabling the data exchange means (1) to establish a communication with the portable data medium (7);
- incorporate means (31) for detecting the presence of the portable data medium (7), designed to deliver to the data exchange means (1) a data medium presence detection signal when the portable data medium is cooperating with the coupling means (5), on reception of a first of said command signals, the transmission of said second input sequence by the data exchange means (1) enabling it to detect the presence of the portable data medium (7) without the latter being powered; and
the data exchange means (1) are designed to send to the coupling means (5), cyclically and before communication with the portable data medium, said second input sequence until it receives said portable data medium presence detection signal.

8. Data exchange device according to claim 7, where the data exchange means (1) are designed to send said first input sequence when the presence of the portable data medium has been detected.

## Patentansprüche

1. Koppler (5) zum Führen einer Kommunikation zwischen einem tragbaren Datenträger (7) und einer Datenaustauschvorrichtung (1), wobei bei der Kommunikation seitens der Datenaustauschvorrichtung (1) mindestens ein Datenübertragungssignal und zwei Steuersignale zum Einsatz kommen, die gemäß einer von einer ersten und zweiten vorbestimmten Eingangsablauffolge von der Datenaustauschvorrichtung (1) abgegeben werden und seitens des Datenträgers (7) mindestens ein Versorgungssignal des Datenträgers, ein Rückstellsignal des Datenträgers und ein Datenübertragungssignal zum Einsatz kommen, **dadurch gekennzeichnet, dass**:
- der Koppler bistabile Steuerungsmittel (25) umfasst, die eingangsseitig durch mindestens die beiden besagten von der Datenaustauschvorrichtung (1) abgegebenen Steuersignale aktiviert werden, wobei die bistabilen Steuerungsmittel (25) angeordnet sind, um ausgangsseitig mindestens das besagte Versorgungssignal und das besagte Rückstellsignal des Datenträgers gemäß einer ersten vorbestimmten Ausgangsablauffolge, welche von der besagten ersten Eingangsablauffolge abhängt, abzugeben;
- die besagte erste Eingangsablauffolge allein fähig ist, die erste Ausgangsablauffolge zu erzeugen, welche nacheinander das besagte Versorgungssignal und das besagte Rückstellsignal des Datenträgers umfasst, durch die die Datenaustauschvorrichtung mit dem tragbaren Datenträger (7) in Kommunikation treten kann.

2. Koppler nach Patentanspruch 1, **dadurch gekennzeichnet, dass** er Mittel (31) zum Erkennen der Anwesenheit des tragbaren Datenträgers (7) umfasst, die angeordnet sind, um an die Datenaustauschvorrichtung (1) ein Anwesenheitssignal des Trägers abzugeben, wenn der tragbare Datenträger mit dem Koppler zusammenwirkt, wobei bei Empfang eines ersten der besagten Steuersignale das Abgeben der besagten zweiten Eingangsablauffolge durch die Datenaustauschvorrichtung (1) dieser ermöglicht, die Anwesenheit des tragbaren Datenträgers (7) zu erkennen, ohne dass dieser gespeist wird.

3. Koppler nach Patentanspruch 1, der Mittel zur Erzeugung von Signalen (29,32) umfasst, um:
- das besagte Versorgungssignal mit einem bestimmten elektrischen Niveau zu empfangen; und
- ausgehend von dem besagten Versorgungssignal an den tragbaren Datenträger (7) das besagte Rückstellsignal und ein Taktsignal abzugeben, sodass diese ein geringeres elektrisches Niveau aufweisen als das bestimmte elektrische Niveau des Versorgungssignals.

4. Koppler nach Patentanspruch 3, in dem die besagten Mittel zur Erzeugung von Signalen (29,32,41) angeordnet sind, um das von der Datenaustauschvorrichtung (1) abgegebene besagte Datenübertragungssignal zu empfangen und ausgehend von besagtem Versorgungssignal an den tragbaren Datenträger (7) das besagte Datenübertragungssignal abzugeben, sodass dieses ein geringeres elektrisches Niveau aufweist als das bestimmte elektrische Niveau des Versorgungssignals.

5. Koppler nach Patentanspruch 1, **dadurch gekennzeichnet, dass**:
- der tragbare Datenträger (7) über entsprechende Gleitkontaktmittel (6) mit dem Koppler zusammenwirkt; und
- die besagten bistabilen Steuerungsmittel (25) Abschwächungsmittel (43) für das Versorgungssignal umfassen, um während der Kommunikation ein elektrisches Niveau des Versorgungssignals auf einen bestimmten Grenzwert abzuschwächen, bevor die besagten entsprechenden Gleitkontaktmittel ihr gegenseitiges Zusammenwirken beenden.

6. Koppler nach Patentanspruch 1, in dem:
- eine Energiequelle (11,12,23,29) vorgesehen und angeordnet ist, um bei Empfang eines von den bistabilen Steuerungsmitteln (25) erhaltenen Aktivierungssignals, das besagte Versorgungssignal und das besagte Rückstellsignal des Datenträgers abzugeben; und
- die bistabilen Steuerungsmittel angeordnet sind, um bei Empfang der besagten ersten Eingangsablauffolge an die Energiequelle das besagte Aktivierungssignal abzugeben.

7. Datenaustauschvorrichtung (1, 5) zum Führen einer Kommunikation mit einem tragbaren Datenträger (7), wobei die Vorrichtung dazu Datenaustauschmittel (1) und Kopplungsmittel (5) umfasst und bei der Kommunikation seitens der Datenaustauschmittel (1) mindestens ein Datenübertragungssignal und zwei Steuersignale zum Einsatz kommen, die von den Datenaustauschmitteln (1) gemäß einer von einer ersten und zweiten vorbestimmten Eingangsablauffolge abgegeben werden und seitens des Datenträgers (7) mindestens ein Versorgungssignal des Datenträgers, ein Rückstellsignal des Datenträgers und ein Datenübertragungssignal zum Einsatz kommen, **dadurch gekennzeichnet, dass** die Kopplungsmittel (5):
- bistabile Steuerungsmittel (25) umfassen, die eingangsseitig durch mindestens die von den Datenaustauschmitteln ( 1 ) abgegebenen besagten beiden Steuersignale aktiviert werden, wobei diese bistabilen Steuerungsmittel (25) angeordnet sind, um ausgangsseitig mindestens das besagte Versorgungssignal und das besagte Rückstellsignal des Datenträgers gemäß einer ersten vorbestimmten Ausgangsablauffolge abzugeben, welche von der besagten ersten Eingangsablauffolge abhängig ist;
- so angeordnet sind, dass die besagte erste Eingangsablauffolge allein dazu fähig ist, die erste Ausgangsablauffolge zu erzeugen, die nacheinander das besagte Versorgungssignal und das besagte Rückstellsignal des Datenträgers umfasst, durch die die Datenaustauschmittel (1) mit dem tragbaren Datenträger (7) in Kommunikation treten können;
- Mittel (31) zum Erkennen der Anwesenheit des tragbaren Datenträgers (7) umfassen, die angeordnet sind, um an die Datenaustauschmittel (1) ein Anwesenheitssignal des Trägers abzugeben, wenn der tragbare Datenträger mit den Kopplungsmitteln (5) zusammenwirkt, wobei bei Empfang eines ersten der besagten Steuersignale das Abgeben der besagten zweiten Eingangsablauffolge durch die Datenaustauschmittel (1) diesem ermöglicht, die Anwesenheit des tragbaren Datenträgers (7) zu erkennen, ohne dass dieser gespeist wird; und
die Datenaustauschmittel (1) angeordnet sind, um vor einer Kommunikation mit dem tragbaren Datenträger an die Kopplungsmittel (5) regelmäßig die besagte zweite Ablauffolge zu senden, bis sie das besagte Anwesenheitssignal des tragbaren Datenträgers empfangen.

8. Datenaustauschvorrichtung nach Patentanspruch 7, in der die Datenaustauschmittel (1) angeordnet sind, um nachdem sie die Anwesenheit des tragbaren Datenträgers erkannt haben, die besagte erste Eingangsablauffolge zu senden.
